# DEMANDE DE BREVET EUROPEEN

(11) **EP 1 763 194 A1**
(43) Date de publication de la demande: **14.03.2007**
(21) Numéro de dépôt: 06120087.9
(22) Date de dépôt: 05.09.2006
(51) Int. Cl.: H04L 29/06, G06F 17/30, G08G 1/127, G08G 1/005, H04L 29/08

(54) **Dispositif de traitement de données d'informations sur des moyens de transport de passagers, pour des terminaux mobiles rattachés à un réseau de communication mobile**

(30) Priorité: 08.09.2005 FR 0552709
(71) Demandeur: ALCATEL, 75008 Paris (FR)
(72) Inventeur: Saidi, Mohamed Adel, 92160, Antony (FR); Betge-Brezetz, Stéphane, 75015, Paris (FR); Delegue, Gérard, 94230, Cachan (FR); Gonguet, Arnaud, 75013, Paris (FR); Fournigault, Lionel, 91190, Gif sûr Yvette (FR)
(74) Mandataire: Chaffraix, Sylvain

(57) **Abrégé**

Un dispositif (D) est dédié au traitement de données d'informations relatives à des moyens de transport de passager(s) (V21-V22), pour des terminaux de communication mobile (T1-T3) rattachés à un réseau de communication mobile (R). Ce dispositif (D) comprend i) des moyens d'interfaçage (MI1) chargés d'échanger des requêtes et messages de réponse avec les terminaux mobiles, et ii) des moyens de traitement (MT) chargés, en cas de réception d'une requête d'obtention d'informations sur au moins une station de dépose (S21-S25) de moyens de transport (V21-V22), de déterminer la position géographique du terminal mobile requérant (T1), puis de déterminer une station de dépose (S23) en fonction de cette position géographique et d'au moins un critère d'optimalité, et de générer un message de réponse comportant au moins les coordonnées de la station de dépose déterminée (S23) à destination du terminal mobile requérant (T1).

## Description

L'invention concerne les réseaux de communication mobile (ou cellulaire), et plus précisément la communication d'informations concernant des moyens de transport à des terminaux de communication mobile rattachés à de tels réseaux.

Les compagnies de transport public de passager(s) disposent de moyens de transport, comme par exemple des bus, des métros, des tramways, des navettes fluviales ou des taxis, qui empruntent des trajets (ou lignes), le plus souvent prédéterminés, passant par des stations de dépose de passagers.

Certaines de ces compagnies disposent d'un système de suivi de flotte qui leur permet de connaître avec une certaine précision les positions de leurs moyens de transport de passager(s) par rapport aux stations de dépose de certaines au moins de leurs lignes. Ces compagnies mettent généralement à la disposition de leurs clients, dans les stations de dépose des lignes équipées à cet effet, des informations relatives au temps estimé d'attente et/ou relatives à certains problèmes de trafic ou incidents. Certaines informations de trafic sont parfois disponibles sur le site Internet (ou le serveur téléphonique) de la compagnie.

Mais, ces informations ont un caractère collectif qui ne permet pas de satisfaire certaines interrogations de clients, en particulier lorsque ces clients ne disposent pas d'un téléphone offrant un accès à l'Internet, ou lorsqu'ils sont éloignés de l'endroit où se trouvent affichées les informations de trafic, ou encore lorsqu'ils ne savent pas où se trouvent une station de dépose ou la station la plus proche de l'endroit où ils se trouvent à un instant donné et la mieux adaptée à leurs besoins.

Dans ces situations, le client doit se rendre dans une station de dépose, ou tenter d'en trouver une lorsqu'il ne connaît pas le quartier, pour tenter d'obtenir les renseignements qu'il recherche. S'il ne peut pas obtenir sur place les renseignements désirés et que le trafic, sur la ligne à laquelle appartient la station de dépose dans laquelle il s'est rendu, est limité, voire interrompu, par exemple du fait d'un incident ou d'un trafic chargé, il est alors contraint d'attendre, alors même que le trafic est peut être normal (ou moins limité) sur une autre ligne, parfois voisine.

L'invention a donc pour but d'améliorer la situation, en permettant à des personnes disposant d'un terminal de communication mobile d'obtenir des informations individuelles et collectives sur des moyens de transport de passager(s), en rapport avec les lieux où ils se trouvent à un instant donné.

Elle propose à cet effet un dispositif de traitement de données d'informations relatives à des moyens de transport de passager(s), pour des terminaux de communication mobile rattachés à un réseau de communication mobile.

Ce dispositif de traitement se caractérise par le fait qu'il comprend :
- des moyens d'interfaçage capables d'échanger des requêtes et messages de réponse avec des terminaux mobiles, et
- des moyens de traitement chargés, en cas de réception d'une requête d'obtention d'informations sur au moins une station de dépose de moyens de transport, de déterminer la position géographique du terminal mobile requérant, puis de déterminer une station de dépose en fonction de cette position géographique et d'au moins un critère d'optimalité, et de générer un message de réponse, comportant au moins les coordonnées de la station de dépose déterminée, à destination du terminal mobile requérant.

Le dispositif de traitement selon l'invention peut comporter d'autres caractéristiques qui peuvent être prises séparément ou en combinaison, et notamment :
- ses moyens de traitement peuvent être chargés d'utiliser un critère d'optimalité de type critère de proximité afin de déterminer la station de dépose dont la position géographique est la plus proche de la position géographique du terminal requérant ;
- ses moyens de traitement peuvent être chargés d'utiliser un premier critère d'optimalité de type critère de proximité, puis un second critère d'optimalité de type critère d'attente en station, de manière à déterminer chaque station de dépose dont la position géographique est située à une distance inférieure à un seuil choisi par rapport à la position géographique du terminal requérant, puis parmi ces stations de dépose déterminées celle(s) où les moyens de transport associés doivent parvenir dans un délai compris dans un intervalle de temps choisi, puis, si au moins une station de dépose satisfait aux deux critères, de sélectionner celle qui est la plus proche de la position géographique du terminal requérant, et, si aucune station de dépose ne répond aux deux critères, de déterminer une station de dépose dont la position géographique est la plus proche de la position géographique du terminal requérant ;
- en variante ses moyens de traitement peuvent être chargés d'utiliser un premier critère d'optimalité de type critère de proximité et un second critère d'optimalité de type critère d'attente en station, afin de déterminer chaque station de dépose dont la position géographique est située à une distance inférieure à un seuil choisi par rapport à la position géographique du terminal requérant et où les moyens de transport associés doivent parvenir dans un délai compris dans un intervalle de temps choisi, puis, si au moins une station de dépose satisfait aux deux critères, de sélectionner celle qui est la plus proche de la position géographique du terminal requérant, et, si aucune station de dépose ne répond aux deux critères, de déterminer une station de dépose dont la position géographique est la plus proche de la position géographique du terminal requérant ;
- ses moyens de traitement peuvent être chargés de définir le seuil et/ou l'intervalle de temps en fonction d'informations contenues dans la requête ;
- ses moyens de traitement peuvent être chargés de déterminer la station de dépose requise en fonction de la désignation d'une destination et/ou d'une ligne de moyens de transport et/ou d'une direction d'une ligne de moyens de transport et/ou d'au moins un type de moyens de transport, contenue dans la requête ;
- ses moyens de traitement peuvent être chargés d'accéder à des premiers moyens de mémorisation, dans lesquels sont stockées des premières données représentatives des positions géographiques de moyens de transport de passager(s), et à des seconds moyens de mémorisation, dans lesquels sont stockées des deuxièmes données représentatives au moins des stations de dépose où les moyens de transport doivent s'arrêter, afin de déterminer des troisièmes données représentatives des horaires de passage estimés des moyens de transport de passager(s) dans des stations de dépose choisies ;
   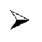 il peut comprendre les premiers moyens de mémorisation et/ou les deuxièmes moyens de mémorisation ;
   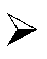 ses moyens de traitement peuvent être chargés d'interroger au moins un équipement externe de manière à recevoir les premières données, et de stocker ces premières données dans les premiers moyens de mémorisation. En variante, ses premiers moyens de mémorisation peuvent être alimentés en premières données mises à jour par au moins un équipement externe ;
   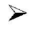 ses moyens de traitement peuvent être chargés d'interroger au moins un équipement externe afin de recevoir les deuxièmes données, et de stocker ces deuxièmes données dans les deuxièmes moyens de mémorisation. En variante, ses deuxièmes moyens de mémorisation peuvent être alimentés en deuxièmes données mises à jour par au moins un équipement externe ;
   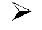 il peut comprendre des troisièmes moyens de mémorisation propres à stocker les troisièmes données. Dans ce cas, ses moyens de traitement peuvent être chargés de stocker les troisièmes données dans les troisièmes moyens de mémorisation après les avoir déterminées ;
   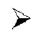 ses moyens de traitement peuvent être chargés de déterminer les troisièmes données en fonction de quatrièmes données représentatives d'informations de trafic et/ou de tables d'horaires prédéfinis ;
      - ses moyens de traitement peuvent être chargés d'interroger au moins un équipement externe de manière à recevoir les quatrièmes données, et de stocker ces quatrièmes données dans lesdits deuxièmes moyens de mémorisation. En variante, ses deuxièmes moyens de mémorisation peuvent être alimentés en quatrièmes données mises à jour par au moins un équipement externe ;
   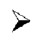 ses moyens de traitement peuvent être chargés d'intégrer dans le message de réponse des troisièmes données représentatives de l'horaire de passage estimé des moyens de transport de passager(s) dans la station de dépose déterminée ;
   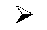 en présence d'une requête demandant des informations complémentaires relatives à des moyens de transport choisis, ses moyens de traitement peuvent être chargés de déterminer des deuxièmes et/ou troisièmes données représentatives des informations complémentaires requises, afin de les intégrer dans le message de réponse.
- ses moyens d'interfaçage peuvent être capables de recevoir tout type de requête et de transmettre tout type de message de réponse correspondant éventuellement au type d'une requête reçue.

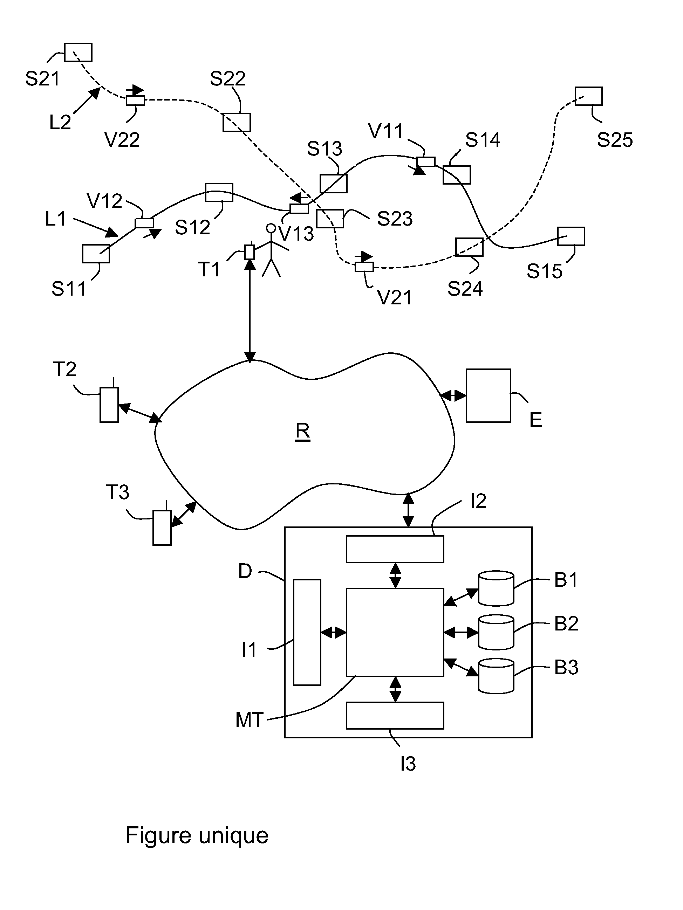

D'autres caractéristiques et avantages de l'invention apparaîtront à l'examen de la description détaillée ci-après, et du dessin annexé, sur lequel l'unique figure illustre de façon très schématique deux lignes de transport en commun et une partie d'un réseau de communication mobile auquel sont connectés des terminaux de communication mobile, des équipements d'information externes et un exemple de réalisation d'un dispositif de traitement selon l'invention. Le dessin annexé pourra non seulement servir à compléter l'invention, mais aussi contribuer à sa définition, le cas échéant.

L'invention a pour objet de permettre la fourniture en temps réel d'informations individuelles et collectives, relatives à des moyens de transport de passager(s), à des terminaux de communication mobile rattachés à des réseaux de communication mobile.

Dans ce qui suit, on considère à titre d'exemple non limitatif que les terminaux de communication mobile sont des téléphones mobiles (ou cellulaires) capables de transmettre et/ou recevoir des messages, par exemple de type SMS (pour « Short Message System » - message court) ou MMS (pour «Multimedia Messaging Service » - message court multimédia) ou WAP (pour « Wireless Application Protocol » - protocole d'accès à l'Internet sans fil) ou de type courriel (ou « e-mail ») ou encore page HTML, avec un équipement de communication distant via au moins un réseau mobile ou cellulaire, lui-même raccordé, de préférence, au réseau Internet. Mais, l'invention n'est pas limitée à cette application. Elle concerne en effet tous les terminaux de communication mobile (ou cellulaire), et notamment les ordinateurs portables, les assistants numériques personnels (ou PDAs) et les téléphones à carte (ou « smart phones »).

Comme cela est schématiquement illustré sur l'unique figure, l'invention propose de rendre accessible à un ou plusieurs réseaux mobiles un ou plusieurs dispositifs D dédiés au traitement de données d'informations relatives à des moyens de transport de passager(s) appartenant à une ou plusieurs compagnies de transport public de passagers.

Dans l'exemple illustré, le patatoïde référencé R matérialise à la fois les réseaux mobiles auxquels sont rattachés des terminaux mobiles Ti, le réseau Internet et des réseaux privés, comme par exemple des réseaux privés appartenant à des compagnies de transport public de passagers, tous connectés les uns aux autres.

Dans l'exemple illustré, l'indice i prend des valeurs comprises entre 1 et 3 (T1 à T3), mais il peut prendre n'importe quelle valeur supérieure ou égale à un (1).

Il est important de noter qu'un dispositif D selon l'invention peut être dédié aux seules informations provenant d'une unique compagnie de transport (comme c'est le cas dans l'exemple illustré), ou bien aux informations provenant de plusieurs compagnies de transport. Lorsque plusieurs dispositifs D coexistent, les clients des réseaux mobiles doivent sélectionner le dispositif qu'ils veulent interroger en fonction du type de moyens de transport pour lequel ils souhaitent obtenir des renseignements (ou informations). Dans ce cas, un portail Internet dédié à l'ensemble des dispositifs peut être prévu pour faciliter l'obtention d'informations.

Chaque dispositif D peut être raccordé soit à un réseau mobile, soit au réseau Internet, soit encore à un réseau privé.

Un dispositif de traitement D comprend au moins un premier module d'interfaçage MI1 et un module de traitement MT.

Le premier module d'interfaçage MI1 (ou interface clients) est une interface de communication multi-types capable d'échanger des requêtes et messages de réponse de tous les types précités avec des terminaux mobiles T rattachés au réseau R (qui comprend ici leur(s) réseau(x) mobile(s) de rattachement ou d'appartenance).

En d'autres termes, cette interface supporte tous les différents types de canaux de communication (notamment SMS, MMS, WAP, courriel, HTML et voix). Elle est donc capable de convertir les requêtes d'obtention d'informations transmises par les terminaux mobiles requérant Ti, en données compréhensibles par le module de traitement MT, et réciproquement de convertir les données de réponse, générées par le module de traitement MT, en messages de réponse compréhensibles par les terminaux mobiles requérant Ti.

Il est important de noter qu'un message de réponse n'est pas obligatoirement du même type que la requête à laquelle il répond. On peut en effet envisager qu'un terminal mobile Ti transmette à un dispositif D une requête de type SMS ou courriel et que le dispositif D réponde à cette requête en transmettant au terminal mobile Ti un message de réponse vocal (au moyen d'un serveur vocal).

Par défaut, et en l'absence d'information de type contraire dans une requête, le type du message de réponse est de préférence identique au type de la requête correspondante. Pour que les types soient différents, il est préférable que le client, qui utilise le terminal mobile requérant Ti, le demande dans sa requête.

Le module de traitement MT intervient chaque fois que le premier module d'interfaçage MI1 lui communique le contenu (converti) d'une requête d'obtention d'informations sur au moins une station de dépose Sjk de moyens de transport Vjm d'une compagnie, reçue d'un terminal mobile requérant Ti. Plus précisément, il est chargé de déterminer la position géographique du terminal mobile requérant Ti, puis de déterminer une station de dépose en fonction de cette position géographique et d'au moins un critère d'optimalité, et enfin de générer des données de réponse devant être transmises au terminal mobile requérant Ti, sous la forme d'un message de réponse comportant au moins les coordonnées de la station de dépose déterminée, par le premier module d'interfaçage MI1 via les réseaux R.

La détermination de la position géographique d'un terminal mobile requérant Ti se fait auprès de son réseau mobile d'appartenance. Comme le sait l'homme de l'art, les réseaux mobiles disposent en effet de moyens leur permettant de connaître avec une assez bonne précision la position géographique des terminaux mobiles qui leurs sont rattachés, et stockent les données représentatives de ces positions géographiques dans une base de données, comme par exemple le HLR (pour « Home Location Register »).

Le module de traitement MT est donc agencé de manière à générer des requêtes à destination des réseaux mobiles pour déterminer les positions géographiques des terminaux mobiles requérant Ti. A cet effet, le dispositif D peut, comme illustré, comporter un deuxième module d'interfaçage MI2 (ou interface réseau mobile) dédié à l'échange de requêtes d'obtention de position géographique et de messages de réponse entre le module de traitement MT et les réseaux mobiles.

Une fois que le module de traitement MT est en possession de la position géographique d'un terminal mobile requérant Ti, il détermine la station qui est la mieux adaptée à ce dernier, compte tenu des éventuelles informations contenues dans la requête qu'il a transmise.

On peut en effet envisager d'utiliser des requêtes élémentaires générées de façon automatisée du seul fait de composer un numéro de téléphone ou une adresse e-mail, et demandant au dispositif D de déterminer une station « optimale », indépendamment de la direction recherchée. Ce cas est notamment adapté aux stations de taxi et aux personnes qui ne connaissent pas du tout les réseaux de transport d'une ville.

On peut également envisager d'utiliser des requêtes comportant des informations spécifiques, comme par exemple la désignation d'une destination et/ou la désignation d'une ligne de transport avec ou sans la direction, et/ou la désignation d'un type de moyens de transport. La génération de ce type de requête nécessite la saisie par le client du terminal mobile requérant Ti des informations spécifiques.

Plusieurs exemples de critères d'optimalité peuvent être utilisés par le module de traitement MT.

Ainsi, le module de traitement MT peut utiliser un critère d'optimalité de type critère de proximité. Dans ce cas, il détermine la station de dépose Sjk dont la position géographique est la plus proche de la position géographique du terminal requérant Ti, indépendamment des positions géographiques des moyens de transport qui doivent (ou sont susceptibles de) s'arrêter dans les stations de dépose Sjk. Il est rappelé que les déterminations des stations optimales s'effectuent parmi les stations de dépose Sjk de la ou des compagnies auxquelles le dispositif D est dédié.

Bien entendu, lorsqu'une requête comprend des informations spécifiques, la détermination de la station optimale est effectuée parmi un nombre de stations de dépose qui est restreint par lesdites informations spécifiques.

Les données représentatives des positions géographiques des stations de dépose Sjk des compagnies et les données représentatives des définitions des éventuelles lignes (ou trajets) prédéterminées qu'empruntent les moyens de transport Vjm d'une compagnie sont fournies par lesdites compagnies. Ces données sont préférentiellement stockées dans des moyens de mémorisation B1 du dispositif D qui peuvent se présenter sous n'importe quelle forme, comme par exemple une mémoire ou une base de données de compagnie (comme c'est le cas dans ce qui suit).

Cette base de données de compagnie B1 peut être soit directement alimentée par un équipement externe E appartenant à la compagnie concernée, par exemple chaque fois qu'elle a effectuée une mise à jour, soit alimentée par le module de traitement MT après qu'il ait obtenu les données auprès d'un équipement externe E appartenant à la compagnie concernée (cette obtention peut par exemple se faire périodiquement). Par exemple, l'équipement externe fait partir du réseau privé de la compagnie ou bien est rattaché au réseau Internet.

Dans un cas comme dans l'autre, lorsque le module de traitement MT doit déterminer une station optimale Sjk, il accède à la base de données de compagnie B1 pour extraire les données qui définissent les stations de dépose Sjk (toutes ou un sous-ensemble restreint par des informations spécifiques contenues dans la requête) parmi lesquelles il doit effectuer sa détermination.

Le module de traitement MT peut également utiliser un premier critère d'optimalité de type critère de proximité et un second critère d'optimalité de type critère d'attente en station. Par exemple, le critère de proximité consiste à déterminer toutes les stations de dépose Sjk dont les positions géographiques sont situées à une distance inférieure à un seuil choisi par rapport à la position géographique du terminal mobile requérant Ti. Le critère d'attente en station peut par exemple consister à déterminer toutes les stations de dépose Sjk où les moyens de transport Vjm associés doivent (ou sont susceptibles de) s'arrêter dans un délai compris dans un intervalle de temps choisi. Ce deuxième critère est destiné à optimiser le choix de la station de dépose conseillée de manière à limiter le temps d'attente d'un client. Il peut en effet être préférable de proposer une station un peu plus éloignée dans laquelle l'attente sera brève, plutôt que de proposer une station dans laquelle l'attente risque d'être (très) longue.

Le seuil et/ou l'intervalle de temps peu(ven)t être prédéfini(s) et donc fixe(s). Mais, il(s) peu(ven)t également être défini(s) ou adapté(s) par le module de traitement MT en fonction d'informations spécifiques contenues dans la requête.

Le module de traitement MT peut tout d'abord déterminer les stations de dépose Sjk qui satisfont au critère de proximité, puis appliquer à celles-ci le critère d'attente en station.

En variante, le module de traitement MT peut déterminer toutes les stations de dépose Sjk qui satisfont au critère de proximité (ce qui donne un premier sous-ensemble) et toutes les stations de dépose Sjk qui satisfont au critère d'attente en station (ce qui donne un second sous-ensemble), puis effectuer l'intersection entre les premier et second sous-ensembles afin de tenter d'obtenir au moins une station de dépose satisfaisant aux deux critères.

Si au moins une station de dépose répond aux deux critères, le module de traitement MT sélectionne préférentiellement celle qui est la plus proche de la position géographique du terminal mobile requérant Ti.

En revanche, si aucune station de dépose ne répond aux deux critères, le module de traitement MT détermine de préférence la station de dépose dont la position géographique est la plus proche de la position géographique du terminal mobile requérant Ti, indépendamment du délai d'attente.

Bien entendu, lorsqu'une requête comprend des informations spécifiques, la détermination de la station optimale est effectuée parmi un nombre de stations de dépose qui est restreint par lesdites informations spécifiques.

Comme indiqué ci-avant, les données représentatives des positions géographiques des stations de dépose Sjk des compagnies sont préférentiellement stockées dans la base de données de compagnie B1 à laquelle peut accéder le module de traitement MT pour déterminer chaque station de dépose Sjk satisfaisant au premier critère ou celle qui est la plus proche (en cas d'intersection vide).

Les données représentatives des positions géographiques des moyens de transport Vjm, qui passent par les stations de dépose Sjk des compagnies, sont fournies par lesdites compagnies. Ces données de position sont préférentiellement stockées dans des moyens de mémorisation B2 du dispositif D qui peuvent se présenter sous n'importe quelle forme, comme par exemple une mémoire ou une base de données de position (comme c'est le cas dans ce qui suit).

Cette base de données de position B2 peut être soit directement alimentée par un équipement externe E appartenant à la compagnie concernée, par exemple chaque fois qu'elle a effectuée une mise à jour, soit alimentée par le module de traitement MT après qu'il ait obtenu les données auprès d'un équipement externe E appartenant à la compagnie concernée (cette obtention peut par exemple se faire périodiquement). Il faut bien entendu que les compagnies disposent de moyens de suivi de leurs moyens de transport Vjm capables de leur fournir leurs positions géographiques respectives. L'équipement externe E qui fournit les données de position est éventuellement le même que celui qui fournit les données de compagnie, comme dans l'exemple non limitatif illustré.

Dans un cas comme dans l'autre, pour faciliter le transfert des données de position de l'équipement externe E vers le dispositif D, ce dernier peut comporter un troisième module d'interfaçage MI3 dédié, comme dans l'exemple non limitatif illustré.

Par ailleurs, dans un cas comme dans l'autre, lorsque le module de traitement MT doit déterminer une station optimale Sjk satisfaisant au critère d'attente en station, il peut tout d'abord accéder à la base de données de position B2 pour extraire les données qui définissent les positions géographiques des moyens de transport Vjm concernés. Puis, le module de traitement MT détermine une estimation du temps nécessaire à chacun des moyens de transport Vjm concernés pour parvenir au niveau des stations de dépose Sjk concernées et donc leurs horaires de passage estimés au niveau de ces dernières. Pour effectuer cette estimation des horaires de passage, le module de traitement MT doit confronter les positions géographiques des moyens de transport Vjm concernés aux positions géographiques des stations de dépose Sjk correspondantes dont les données représentatives sont par exemple stockées dans la base de données de compagnie B1. Cette confrontation s'effectue de préférence compte tenu de données représentatives d'informations de trafic et/ou d'éventuelles tables d'horaires.

Ces données de trafic et/ou de tables d'horaires sont préférentiellement stockées dans la base de données de compagnie B1. Elles peuvent être soit directement fournies par un équipement externe E appartenant à la compagnie concernée, par exemple chaque fois qu'elle a effectuée une mise à jour, soit fournies par le module de traitement MT après qu'il les ait obtenues auprès d'un équipement externe E appartenant à la compagnie concernée (cette obtention peut par exemple se faire périodiquement). L'équipement externe E qui fournit les données de trafic est éventuellement le même que celui qui fournit les données de compagnie, comme dans l'exemple non limitatif illustré.

Dans une variante destinée à optimiser le temps de détermination d'une station optimale, le module de traitement MT peut déterminer (par exemple périodiquement ou chaque fois que la base de données de position B2 est mise à jour) les données représentatives des horaires de passage estimés des moyens de transport Vjm dans les différentes stations de dépose Sjk où il doivent (ou sont susceptibles de) s'arrêter. Pour ce faire, il procède comme indiqué ci-avant en accédant aux base de données de position B2 et base de données de compagnie B1 (en prenant de préférence en compte les données de trafic et/ou les éventuelles données des tables d'horaires).

Puis, le module de traitement MT stocke ces données représentatives des horaires de passage estimés dans des moyens de mémorisation B3 du dispositif D, qui peuvent se présenter sous n'importe quelle forme, comme par exemple une mémoire ou une base de données d'horaire de passage (comme c'est le cas dans ce qui suit).

Dans ce cas, le module de traitement MT n'a plus qu'à accéder à la base de données d'horaire de passage B3 pour déterminer les horaires de passage des moyens de transport Vjm au niveau des stations de dépose Sjk concernées, lorsqu'il doit déterminer une station optimale.

Une fois que le module de traitement MT dispose des stations de dépose satisfaisant au critère de proximité et des horaires de passage des moyens de transport Vjm au niveau des stations de dépose Sjk concernées, il peut déterminer la station optimale pour le terminal mobile requérant Ti en utilisant l'une ou l'autre des méthodes présentées ci-avant.

Une fois que le module de traitement MT a déterminé une station optimale pour un terminal mobile requérant Ti, il génère des données de réponse représentatives au moins de ses coordonnées (ou adresse) afin que le premier module d'interfaçage MI1 les intègre dans un message de réponse destiné audit terminal mobile requérant Ti. Les coordonnées peuvent être éventuellement accompagnées du délai d'attente des moyens de transport Vjm.

Un message de réponse peut également comporter des informations complémentaires destinées à répondre à des interrogations contenues dans les requêtes des clients et relatives, par exemple, aux stations de dépose d'une ligne de transport et/ou aux moyens de transport et/ou aux horaires prédéfinis et/ou aux compagnies et/ou aux tarifs et/ou à une zone de destination (restaurants, parcs de loisirs, cinémas, théâtres, musées, salles de concert, et analogues).

On va maintenant décrire trois exemples non limitatifs d'utilisation du dispositif D selon l'invention, en référence à l'unique figure.

Dans ces trois exemples, on considère qu'une unique compagnie dispose de deux lignes de métro (bidirectionnelles) L1 et L2 (ou Lj, avec j = 1 ou 2) et que chacune de ces lignes Lj dispose de cinq stations de dépose Sj1 à Sj5 (ou Sjk, avec k = 1 à 5) dans lesquelles doivent s'arrêter, à un instant donné, des métros Vjm (V11 à V13 (m = 1 à 3) dans le cas de L1, et V21 et V22 (m = 1 ou 2) dans le cas de L2).

Dans le premier exemple, le module de traitement MT est agencé de manière à n'appliquer qu'un critère d'optimalité de type critère de proximité.

Le client disposant d'un terminal T1 transmet au dispositif D une requête élémentaire demandant la station qui est la plus proche de lui (et donc sans information spécifique complémentaire).

Lorsque le premier module d'interfaçage MI1 reçoit la requête du terminal mobile T1, par exemple sous la forme d'un SMS, il transmet son contenu au module de traitement MT. Ce dernier génère une requête à destination du réseau mobile R auquel est rattaché le terminal mobile T1 afin qu'il lui transmette la position géographique dudit terminal mobile T1. Puis, le module de traitement MT accède à la base de données de compagnie B1 afin de déterminer les positions géographiques des stations Sjk des lignes L1 et L2. Il compare ensuite ces positions géographiques à la position géographique du terminal mobile T1 transmise par le réseau mobile R, afin de déterminer celle qui est la plus proche dudit terminal mobile T1 (application du critère de proximité). Dans l'exemple illustré, il s'agit de la station S23 de la seconde ligne L2. Enfin, le module de traitement MT génère des données de réponse représentant les coordonnées de la station S23 que le premier module d'interfaçage MI1 transmet au terminal mobile T1 sous la forme d'un message de réponse, par exemple de type SMS ou message vocal.

Dans le deuxième exemple, le module de traitement MT est agencé de manière à appliquer un premier critère d'optimalité de type critère de proximité, puis un second critère d'optimalité de type critère d'attente en station.

Le client disposant d'un terminal T1 transmet également au dispositif D une requête élémentaire demandant la station qui est la plus proche de lui (et donc sans information spécifique complémentaire).

Dans ce cas, lorsque le premier module d'interfaçage MI1 reçoit la requête du terminal mobile T1, par exemple sous la forme d'un courriel (ou e-mail), il transmet son contenu au module de traitement MT. Ce dernier génère une requête à destination du réseau mobile R auquel est rattaché le terminal mobile T1 afin qu'il lui transmette la position géographique dudit terminal mobile T1. Puis, le module de traitement MT accède à la base de données de compagnie B1 afin de déterminer les positions géographiques des stations Sjk des lignes L1 et L2. Il détermine ensuite la distance qui sépare ces stations Sjk du terminal mobile T1, puis compare ces distances à un seuil choisi afin de retenir les stations Sjk correspondant à une distance inférieure au seuil choisi (application du critère de proximité). Les stations retenues sont par exemple S12, S13, S22 et S23. Il détermine ensuite dans la base de données d'horaire de passage B3 les horaires estimés de passage des métros Vjm dans les stations retenues S12, S13, S22 et S23. Puis, il sélectionne parmi ces stations retenues celle(s) qui correspond(ent) à un horaire de passage compris dans l'intervalle de temps choisi (application du critère d'attente en station). Par exemple, les stations sélectionnées sont S12 (les métros V12 et V13 doivent arriver prochainement dans S12) et S22 (le métro V22 doit arriver prochainement dans S22). Ensuite, le module de traitement MT choisit comme station optimale celle qui est la plus proche du terminal mobile T1. Il s'agit ici de la station S12 de la première ligne L1. Enfin, le module de traitement MT génère des données de réponse représentant les coordonnées de la station S12 que le premier module d'interfaçage MI1 transmet au terminal mobile T1 sous la forme d'un message de réponse, par exemple de type courriel ou message vocal.

Dans le troisième exemple, le module de traitement MT est également agencé de manière à appliquer un premier critère d'optimalité de type critère de proximité, puis un second critère d'optimalité de type critère d'attente en station. Mais maintenant, le client disposant d'un terminal T1 transmet au dispositif D une requête demandant la station qui est la plus proche de lui et qui lui permet de joindre une destination X (information spécifique complémentaire).

Dans ce cas, lorsque le premier module d'interfaçage MI1 reçoit la requête du terminal mobile T1, par exemple sous la forme d'un courriel (ou e-mail), il transmet son contenu au module de traitement MT. Ce dernier génère une requête à destination du réseau mobile R auquel est rattaché le terminal mobile T1 afin qu'il lui transmette la position géographique dudit terminal mobile T1. Puis, le module de traitement MT accède à la base de données de compagnie B1 afin de déterminer la station qui dessert la destination X. Il s'agit par exemple de la station S25 de la ligne L2. Le module de traitement MT accède alors de nouveau à la base de données de compagnie B1 afin de déterminer les positions géographiques des stations S2k de la ligne L2. Il détermine ensuite la distance qui sépare ces stations S2k du terminal mobile T1, puis compare ces distances à un seuil choisi afin de retenir les stations S2k correspondant à une distance inférieure au seuil choisi (application du critère de proximité). Les stations retenues sont par exemple S22 et S23. Il détermine ensuite dans la base de données d'horaire de passage B3 les horaires estimés de passage des métros V2m dans les stations retenues S22 et S23. Puis, il sélectionne parmi ces stations retenues celle(s) qui correspond(ent) à un horaire de passage compris dans l'intervalle de temps choisi (application du critère d'attente en station). Par exemple, les stations sélectionnées sont encore S22 et S23 (le métro V22 doit arriver prochainement dans S22, puis dans S23). Ensuite, le module de traitement MT choisit comme station optimale celle qui est la plus proche du terminal mobile T1. Il s'agit ici de la station S23 de la seconde ligne L2. Enfin, le module de traitement MT génère des données de réponse, représentant les coordonnées de la station S23 et signalant que la destination X est desservie par la station S25 (ici le terminus de la seconde ligne L2), que le premier module d'interfaçage MI1 transmet au terminal mobile T1 sous la forme d'un message de réponse, par exemple de type courriel ou message vocal.

Le dispositif de traitement D selon l'invention, et notamment son premier module d'interfaçage MI1 et son module de traitement MT, ainsi que ses éventuels deuxièmes MI2 et troisièmes MI3 modules d'interfaçage et premiers B1, deuxièmes B2 et troisièmes B3 moyens de mémorisation, peuvent être réalisés sous la forme de circuits électroniques, de modules logiciels (ou informatiques), ou d'une combinaison de circuits et de logiciels.

L'invention offre plusieurs avantages, parmi lesquels :
- elle permet de mettre à la disposition des clients des compagnies de transport public de passagers de très nombreuses informations, inaccessibles auparavant,
- elle permet de répondre de façon totalement automatisée (sans intervention humaine) aux interrogations individuelles des clients relatives aux moyens de transport accessibles à proximité du lieu où ils se trouvent,
- elle est facile à mettre en oeuvre puisqu'elle requiert essentiellement un dispositif de traitement D et des liaisons avec des équipements externes de compagnies de transport public de passagers,
- les clients qui requièrent des informations ont un minimum d'opérations a effectuer pour générer une requête.

L'invention ne se limite pas aux modes de réalisation de dispositif de traitement décrits ci-avant, seulement à titre d'exemple, mais elle englobe toutes les variantes que pourra envisager l'homme de l'art dans le cadre des revendications ci-après.

## Revendications

1. Dispositif (D) de traitement de données d'informations relatives à des moyens de transport de passager(s) (Vjm), pour des terminaux de communication mobile (Ti) rattachés à un réseau de communication mobile (R), **caractérisé en ce qu'**il comprend i) des moyens d'interfaçage (MI1) agencés pour échanger des requêtes et messages de réponse avec des terminaux mobiles (Ti), et ii) des moyens de traitement (MT) agencés, en cas de réception d'une requête d'obtention d'informations sur au moins une station de dépose (Sjk) de moyens de transport (Vjm), pour déterminer la position géographique du terminal mobile requérant (Ti), puis pour déterminer une station de dépose en fonction de cette position géographique et d'au moins un critère d'optimalité, et pour générer un message de réponse comportant au moins les coordonnées de la station de dépose déterminée à destination dudit terminal mobile requérant (Ti).

2. Dispositif selon la revendication 1, **caractérisé en ce que** lesdits moyens de traitement (MT) sont agencés pour utiliser un critère d'optimalité de type critère de proximité de manière à déterminer la station de dépose (Sjk) dont la position géographique est la plus proche de la position géographique dudit terminal requérant (Ti).

3. Dispositif selon la revendication 1, **caractérisé en ce que** lesdits moyens de traitement (MT) sont agencés pour utiliser un premier critère d'optimalité de type critère de proximité, puis un second critère d'optimalité de type critère d'attente en station, de manière à déterminer chaque station de dépose (Sjk) dont la position géographique est située à une distance inférieure à un seuil choisi par rapport à la position géographique dudit terminal requérant (Ti), puis parmi ces stations de dépose déterminées celle(s) où les moyens de transport associés (Vjm) doivent parvenir dans un délai compris dans un intervalle de temps choisi, puis i) en présence d'au moins une station de dépose (Sjk) satisfaisant aux deux critères, pour sélectionner celle qui est la plus proche de la position géographique dudit terminal requérant (Ti), et ii) en l'absence de station de dépose répondant aux deux critères, pour déterminer une station de dépose (Sjk) dont la position géographique est la plus proche de la position géographique dudit terminal requérant (Ti).

4. Dispositif selon la revendication 1, **caractérisé en ce que** lesdits moyens de traitement (MT) sont agencés pour utiliser un premier critère d'optimalité de type critère de proximité et un second critère d'optimalité de type critère d'attente en station, de manière à déterminer chaque station de dépose (Sjk) dont la position géographique est située à une distance inférieure à un seuil choisi par rapport à la position géographique dudit terminal requérant (Ti) et où les moyens de transport associés (Vjm) doivent parvenir dans un délai compris dans un intervalle de temps choisi, puis i) en présence d'au moins une station de dépose (Sjk) satisfaisant aux deux critères, pour sélectionner celle qui est la plus proche de la position géographique dudit terminal requérant (Ti), et ii) en l'absence de station de dépose répondant aux deux critères, pour déterminer une station de dépose (Sjk) dont la position géographique est la plus proche de la position géographique dudit terminal requérant (Ti).

5. Dispositif selon l'une des revendications 2 à 4, **caractérisé en ce que** lesdits moyens de traitement (MT) sont agencés pour définir ledit seuil et/ou ledit intervalle de temps en fonction d'informations contenues dans ladite requête.

6. Dispositif selon l'une des revendications 1 à 5, **caractérisé en ce que** lesdits moyens de traitement (MT) sont agencés pour déterminer la station de dépose requise (Sjk) en fonction d'une désignation d'une destination et/ou d'une ligne (Lj) de moyens de transport (Vjm) et/ou d'une direction d'une ligne (Lj) de moyens de transport (Vjm) et/ou d'au moins un type de moyens de transport (Vjm), contenue dans ladite requête.

7. Dispositif selon l'une des revendications 1 à 6, **caractérisé en ce que** lesdits moyens de traitement (MT) sont agencés pour accéder à des premiers moyens de mémorisation (B2), dans lesquels sont stockées des premières données représentatives des positions géographiques de moyens de transport de passager(s) et à des seconds moyens de mémorisation (B1) dans lesquels sont stockées des deuxièmes données représentatives au moins des positions géographiques des stations de dépose (Sjk) où lesdits moyens de transport de passager(s) (Vjm) doivent s'arrêter, de manière à déterminer des troisièmes données représentatives des horaires de passage estimés des moyens de transport de passager(s) (Vjm) dans des stations de dépose choisies (Sjk).

8. Dispositif selon la revendication 7, **caractérisé en ce qu'**il comprend lesdits premiers moyens de mémorisation (B2) et/ou lesdits deuxièmes moyens de mémorisation (B1).

9. Dispositif selon l'une des revendications 7 et 8, **caractérisé en ce que** lesdits moyens de traitement (MT) sont agencés pour interroger au moins un équipement externe (E) de manière à recevoir lesdites premières données et pour stocker ces premières données dans lesdits premiers moyens de mémorisation (B2).

10. Dispositif selon l'une des revendications 7 et 8, **caractérisé en ce que** lesdits premiers moyens de mémorisation (B2) sont alimentés en premières données mises à jour par au moins un équipement externe (En).

11. Dispositif selon l'une des revendications 7 à 10, **caractérisé en ce que** lesdits moyens de traitement (MT) sont agencés pour interroger au moins un équipement externe (E) de manière à recevoir lesdites deuxièmes données et pour stocker ces deuxièmes données dans lesdits deuxièmes moyens de mémorisation (B1).

12. Dispositif selon l'une des revendications 7 à 10, **caractérisé en ce que** lesdits deuxièmes moyens de mémorisation (B1) sont alimentés en deuxièmes données mises à jour par au moins un équipement externe (E).

13. Dispositif selon l'une des revendications 7 à 12, **caractérisé en ce qu'**il comprend des troisièmes moyens de mémorisation (B3) propres à stocker lesdites troisièmes données, et **en ce que** lesdits moyens de traitement (MT) sont agencés pour stocker lesdites troisièmes données dans lesdits troisièmes moyens de mémorisation (B3) après les avoir déterminées.

14. Dispositif selon l'une des revendications 7 à 13, **caractérisé en ce que** lesdits moyens de traitement (MT) sont agencés pour déterminer lesdites troisièmes données en fonction de quatrièmes données représentatives d'informations de trafic et/ou de tables d'horaires prédéfinis.

15. Dispositif selon la revendication 14, **caractérisé en ce que** lesdits moyens de traitement (MT) sont agencés pour interroger au moins un équipement externe (E) de manière à recevoir lesdites quatrièmes données et pour stocker ces quatrièmes données dans lesdits deuxièmes moyens de mémorisation (B1).

16. Dispositif selon la revendication 14, **caractérisé en ce que** lesdits deuxièmes moyens de mémorisation (B1) sont alimentés en quatrièmes données mises à jour par au moins un équipement externe (E).

17. Dispositif selon l'une des revendications 7 à 16, **caractérisé en ce que** lesdits moyens de traitement (MT) sont agencés pour intégrer dans ledit message de réponse des troisièmes données représentatives de l'horaire de passage estimé des moyens de transport de passager(s) dans ladite station de dépose déterminée.

18. Dispositif selon l'une des revendications 7 à 17, **caractérisé en ce que** lesdits moyens de traitement (MT) sont agencés, en présence d'une requête demandant des informations complémentaires relatives à des moyens de transport choisis (Vjm), pour déterminer des deuxièmes et/ou troisièmes données représentatives desdites informations complémentaires requises de manière à les intégrer dans ledit message de réponse.

19. Dispositif selon l'une des revendications 1 à 18, **caractérisé en ce que** lesdits moyens d'interfaçage (MI1) sont agencés pour recevoir tout type de requête et transmettre tout type de message de réponse.
